# EUROPEAN PATENT APPLICATION

(11) **EP 2 374 662 A2**
(43) Date of publication of application: **12.10.2011**
(21) Application number: 11155880.5
(22) Date of filing: 24.02.2011
(51) Int. Cl.: B60R 1/02

(54) **Blind Spot Detection System**

(30) Priority: 08.04.2010 US 756650
(71) Applicant: Ford Global Technologies, LLC, Dearborn, MI 48126 (US)
(72) Inventor: Cuddihy, Mark A., New Boston, MI 48164 (US); Rao, Manoharprasad K., Novi, MI 48375 (US); Schondorf, Steven Yellin, Dearborn, MI 48124 (US); Schondorf, Kristin Marie, Dearborn, MI 48124 (US)
(74) Representative: Harrison Goddard Foote

(57) **Abstract**

A method and system to control a side mirror are disclosed in which a blind spot detector is used to determine whether an alien vehicle is present in a blind spot of a host vehicle. A sensor proximate a driver's seat detects whether the seat is in a first range or a second range. The side mirror is rotated a first predetermined angle when the alien vehicle is detected and the seat is in the first range; and the side mirror is rotated a second predetermined angle when the alien vehicle is detected and the seat is in a second range.

## Description

The disclosure relates to alerting a driver of an automotive vehicle as to the presence of an object in the vehicle's blind spot.

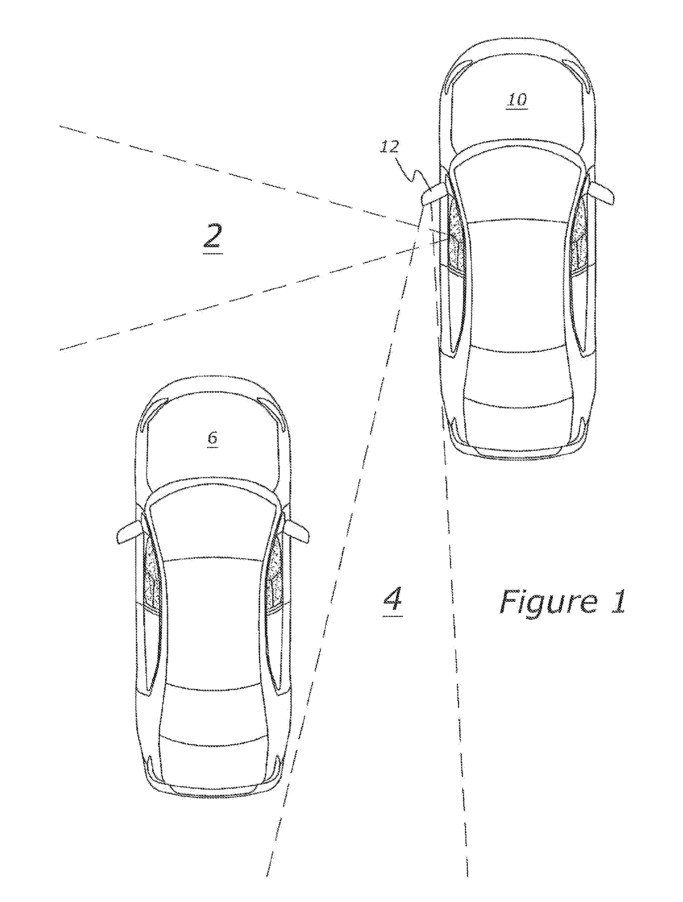

Mirror systems are provided on automotive vehicles to aid the operator of the vehicle in viewing other vehicles while merging, lane changing, turning, reversing, etc. Mirrors can provide a view of the vehicles and objects in the vicinity of the operator's vehicle. However, the effectiveness of that view depends on alignment of the mirrors. It is known in the art, through customer interviews, car clinics, and survey comments that most vehicle operators align their exterior side mirrors in an orientation in which a portion of the vehicle is visible in the side view mirror, such as shown in Figure 1. Side mirror 12 is adjusted so that the viewing region 4 intersects the back corner of vehicle 10. The driver can also view objects in his/her field of view out of the window, illustrated as region 2. However, a blind spot exists such that the driver does not have a view of alien vehicle 6 without craning his/her neck around.

Blind spot detection systems have been developed in which the presence of an alien vehicle, or other object, in the blind spot can be determined. One issue is how to use such information to improve the driver's knowledge about such vehicles detected in the blind spot.

According to a first aspect of the invention there is provided a method of adjusting a side mirror in accordance with claim 1. According to a second aspect of the invention there is provided an apparatus for adjusting a side mirror in accordance with claim 8.

To address at least one issue, a method and apparatus to control a side mirror is disclosed. A blind spot detector is used to determine whether an alien vehicle is present in a blind spot of a host vehicle.

According to one aspect of the invention, a sensor on or proximate or at least operatively coupled to the driver's seat detects whether the seat's fore-aft position is at a first or second position or within a first range or a second range. In one embodiment, the side mirror is rotated a first predetermined angle when the alien vehicle is detected and the seat position is in the first range; and the side mirror is rotated a second predetermined angle when the alien vehicle is detected and the seat position is in a second range. The first range is when the seat position is more forward and the second range is when the seat position is more rearward; in such case, the first predetermined angle is more than the second predetermined angle.

An advantage in such an approach is that human attention is drawn by a moving object. Thus, even though the driver may not be looking into the mirror prior to, or at the time that the mirror is first moved, the movement is likely to catch the driver's attention. By selecting the first and second predetermined angles judiciously, the driver will see the vehicle that was in his/her blind spot in the rear view mirror.

Also, the mirror is in the driver's peripheral vision and the invention takes advantage of this. It is known that the human eye responds well to movement within the peripheral region and so mirror movement is very likely to be noticed.

Furthermore, the driver's attention is drawn to the mirror itself and will then see the vehicle in his/her blind spot. This approach is more intuitive and clear, and reduces thinking/reaction time, compared with for instance an illuminated light provided at the dashboard.

In one embodiment, the initial position of the side mirror prior to the rotating in response to detecting of the alien vehicle is determined and stored. The side mirror is rotated back to the initial position when no alien vehicle is detected. In an alternative embodiment, the side mirror is rotated back to the initial position after a predetermined period of time after the rotating to one of the first or second predetermined angles.

An advantage presented is that the mirror is returned to the position at which the driver had initially positioned the mirror, thereby restoring the original mirror position set by the driver, and offering a consistent view angle when no vehicle is in the blind spot.

In embodiments in which the side mirror has no position sensor, mirror position is determined based on counting motor rotations. To calibrate the system, the mirror is commanded to known positions to reset the counter. Such known positions for rotation about one axis of adjustment are the most inward position of the mirror and the most outward position of the mirror, i.e., positions at which the mirror hits a stop. Calibrations can be performed periodically to ensure that the count is not in error due to missing a count or in the mirror jumping due to being bumped or jarred.

In embodiments in which a side mirror position sensor is provided, the sensor can be calibrated by taking a sensor measurement at known positions, such as the stops. The expected sensor signal is compared with the actual sensor signal. If the error is greater than a threshold, the sensor signal calibration coefficients are adjusted to bring the error under the threshold.

In yet another embodiment, the system detects whether such an adjustment is warranted or not. Most drivers position the mirrors to view a portion of the vehicle in the side mirror, which can lead to a blind spot proximate the vehicle, i.e., a region proximate the vehicle that can only be viewed by the driver craning his/her neck at an angle. However, other drivers do position their mirrors to alleviate such a blind spot. According to one embodiment, prior to making adjustments to the mirror's position in response to detection of a vehicle in the blind spot, it is determined whether the initial position, the driver adjusted position, of the mirror is such that the blind spot issue is largely ameliorated. Determination of such an initial position which largely prevents a blind spot is based on whether the seat track is in the forward or rearward position, as determined from a two-position seat sensor. In the event that a mirror position not leading to a blind spot is detected, the algorithm is prevented from rotating the mirror based on detecting a vehicle in the blind spot.

The invention will not be described, by way of example only, with reference to the accompanying drawings in which:
Figure 1 is a plan view of two vehicles to illustrate a blind spot;
Figure 2 is a plan view of a vehicle indicating a reference system;
Figure 3 is a schematic of the electronic coupling of several pertinent vehicle subsystems; and
Figures 4-6 are flowcharts of procedures according to embodiments of the disclosure.

As those of ordinary skill in the art will understand, various features of the embodiments illustrated and described with reference to any one of the Figures may be combined with features illustrated in one or more other Figures to produce alternative embodiments that are not explicitly illustrated or described. The combinations of features illustrated provide representative embodiments for typical applications. However, various combinations and modifications of the features consistent with the teachings of the present disclosure may be desired for particular applications or implementations. Those of ordinary skill in the art may recognize similar applications or implementations whether or not explicitly described or illustrated.

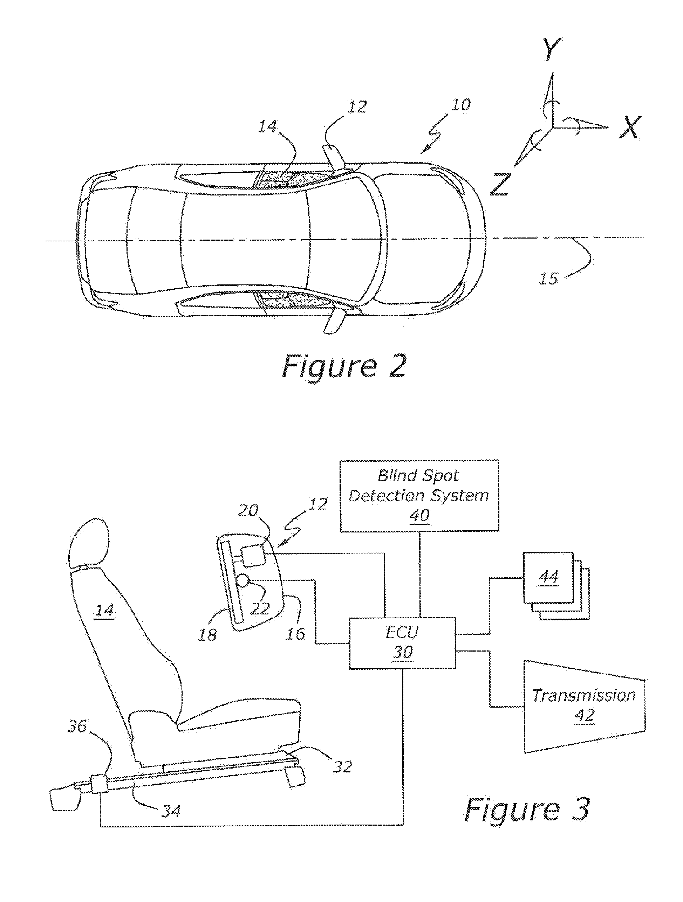

A plan view of a vehicle 10 is shown in Figure 2. The vehicle has a left side mirror 12 and a driver's seat 14. In Figure 2, mirror 12 and seat 14 are shown for a left side drive vehicle. The discussion in relation to Figure 2 refers to left side mirror 12, which will be called simply mirror below. However, such an arrangement is also applicable to a right side mirror in a right side drive vehicle. The disclosure applies as well to the passenger side mirror, which is also used by the driver to indicate vehicles in adjacent lanes and is subject to the same concerns. A longitudinal axis 15 and a coordinate system are also shown in Figure 2. X and y axes are in the plane of the drawing. The z axis comes out of the plane of Figure 2, corresponding to the height of vehicle 10.

A schematic of a portion of vehicle 10 is shown in Figure 3. Side mirror 12 includes a housing 16 with a mirror element 18 disposed therein. The angle of mirror element 18 is rotated about the z axis by motor 20, which is included in housing 16. Typically, an additional motor is included in mirror 12 to rotate mirror element 18 about the y axis. For the purposes of the present disclosure, it is assumed that the driver of vehicle 10 has adjusted side mirror 12 with respect to the adjustment about the y axis as desired. The present disclosure is directed primarily to adjustment about the z axis. Motor 20 is electronically coupled to an electronic control unit (ECU) 30 so that the angle of mirror 12 can be adjusted under control of ECU 30. Additionally, a sensor 22 is coupled to mirror element 18 from which the angle of mirror, in regards to rotation about the z axis can be determined. Sensor 22 can be a linear sensor placed proximate one end of mirror element 18. Sensor 22 can be an angular sensor. In yet another alternative, sensor 22 is integrated with motor 20. Any suitable sensor can be used. Sensor 22 is electronically coupled to ECU 30.

A seat 14 is shown in Figure 3, having a base 32, which can translate along a track 34. Track 34 is mounted to a floor (not shown) of the vehicle. A fore/aft sensor 36 detects a position of seat 14. Sensor 36, in one example, is a Hall effect sensor. The voltage output of the Hall effect sensor depends on the magnetic field proximate the sensor. In the position of seat 14 shown in Figure 3, base 32 is not proximate sensor 36. At some point during rearward seat movement, base 32 is proximate sensor 36, thereby changing the output of the sensor 36. The seat is in the fore position when base 32 is not proximate sensor 36. The seat is in the aft position when base 32 is proximate sensor 36. Sensor 36 is electronically coupled to ECU 30. Alternatively, a linear sensor can be used in place of a two-position fore/aft sensor 36. However, some vehicles are equipped with such a two-position fore/aft sensor to support other vehicle functions. Even in vehicles not equipped with such a sensor, the two-position Hall effect sensor may be a less costly option than a sensor providing a greater resolution. In an alternative embodiment, sensor 36 provides greater resolution than fore/aft information. The sensor may be a linear sensor, coupled to the seat motor to determine position, or any suitable sensor.

A blind spot detection system 40 is coupled to ECU 30. One system is disclosed in U.S. 7,612,658 filed April 11, 2007, entitled System and Method of Modifying Programmable Blind Spot Detection Sensor Ranges With Vision Input," assigned to the assignee of the present application, and incorporated herein by reference in its entirety. However, any system based on cameras, radar, infrared, motion detection, lidar, or other suitable system may be used.

A transmission 42 is also electronically coupled to ECU 30 so that ECU 30 has information about the gear selected in transmission 42. Other sensors and actuators 44 are also coupled to ECU 30. These may include sensors measuring temperature, pressure, rotational speed, valve position, etc. and actuators being controlled may include a throttle valve, an EGR valve, fuel injectors, climate control, transmission shifts, etc.

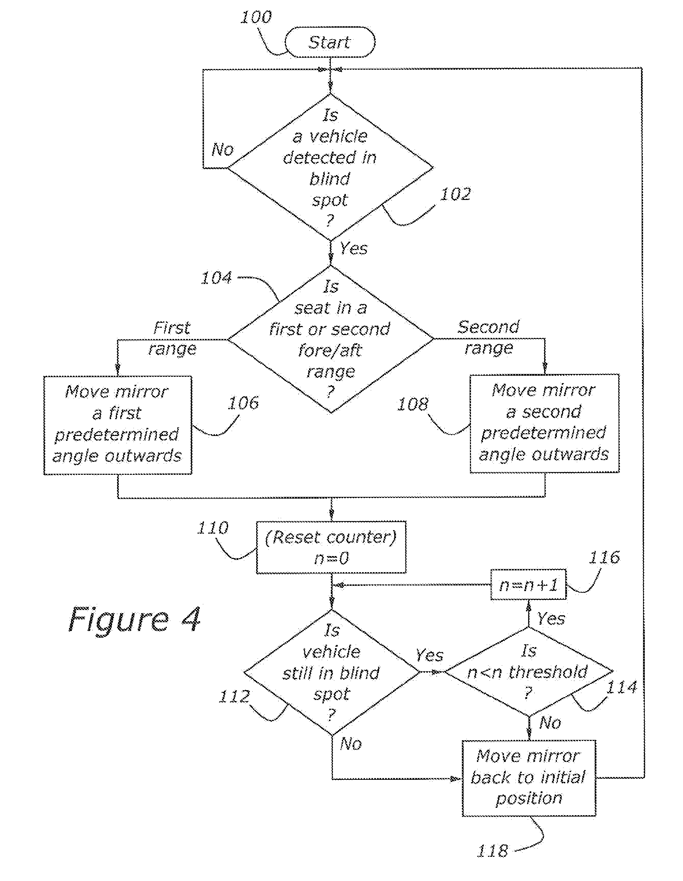

In Figure 4, a flowchart illustrating an embodiment of the disclosure starts at 100. In block 102, it is determined whether a vehicle is detected in the blind spot of the host vehicle. If not, the detection of block 102 continues until a vehicle is detected in 102 such that control passes to block 104. In block 104, it is determined whether the driver's seat is in a first fore/aft range or position or a second fore/aft range or position. Hereinafter, an embodiment which uses two fore/aft ranges will be described. If the driver's seat is in a first range, control passes to block 106 in which the mirror is moved a first predetermined angle outwards with respect to the longitudinal axis of the vehicle. If in a second range, control passes to block 108 in which the mirror is moved a second predetermined angle outwards with respect to the longitudinal axis of the vehicle. In either case, control passes to block 110, in which a counter, n, is reset to zero. Control then passes to block 112 in which it is determined whether the alien vehicle, or any vehicle, is still in the blind spot. If yes, control passes to block 114 in which it is determined whether the current value of the counter, n, is less than a threshold value, n_threshold. If so, control passes to block 116 in which the counter, n, is incremented before control passes back to 112. In the event of a negative result in either block 112 or 114, control passes to block 118 in which the mirror is moved back to its initial position, i.e., the position of the mirror prior to the mirror being moved in blocks 106 or 108. Control then passes back to block 102 to detect a vehicle in the blind spot.

Blocks 110, 114, and 116 in Figure 4 indicate one embodiment in which the mirror is brought back to its initial position regardless of whether a vehicle is in the blind spot. Such an escape is provided in case that the blind spot detection system is yielding a spurious signal or simply to return the mirror to its initial position after sufficient time for the driver to realize the presence of a vehicle in the blind spot. In an alternative embodiment, such blocks 110, 114, and 116 are not provided so that the mirror remains in the adjusted position until no vehicle is detected in the blind spot. In such an alternative embodiment without blocks 110, 114, and 116, a positive result in block 112 continues to return control to block 112 until a negative result is encountered.

In block 118 of Figure 4, the mirror is returned to the initial position. Sensor 22 provides an output to ECU30. In one embodiment, the initial position of the mirror is determined by ECU 30 obtaining a measure of sensor 22 output and storing in memory associated with ECU 30. Storing the initial position information can be accomplished by an additional block in Figure 4, between blocks 100 and 102; or between blocks 102 and 104; or between blocks 104 and 106 and between blocks 104 and 108.

In an alternative embodiment, the return of the mirror to the initial position is accomplished by moving the mirror inward an amount that the mirror was moved outward in blocks 106 or 108. In such an embodiment, the amount that the mirror was moved outward in 106 or 108 is stored in a memory location so that the opposite of that movement can be accomplished in block 118. In such an embodiment, the amount that the mirror was moved outward is stored after block 106 or 108. In an alternative embodiment, the duration that the motor is activated to restore the mirror to the inward position is set to be equal to the duration that the motor was activated to move this mirror to the outward position.

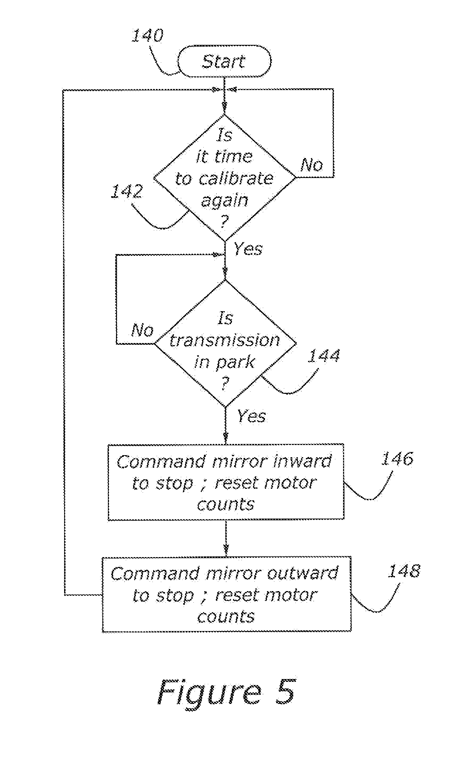

In some embodiments, the mirror position is determined by keeping track of the motor counts commanded to the mirror. That is, if the mirror is a stepper motor, a command to rotate in a first direction a number of steps is added to the value of the stored value of counts and a command to rotate in a direction opposite to the first direction is subtracted from the stored value of counts. This stored value provides an indication of the position of the mirror. However, over time the value can become offset due to the mirror being bumped, the motor of the mirror skipping a step, etc. Thus, it is desirable to perform a calibration of the mirror periodically. In Figure 5, a calibration routine stars in 140. Control passes to 142 in which it is determined whether it is time to calibrate again. This can be based on a number of engine starts since the last calibration or elapsed running time, as examples. If yes, control passes to 144 to determine if the transmission is in park. This is just one example of a favorable time for the control of the mirror to be taken over for the purposes of performing a calibration. Another suitable example that also is useful in manual transmission vehicles is when vehicle speed is zero. Calibration is delayed until such favorable time for calibration is encountered. Control passes to block 146 in which the mirror is commanded inward to its stop. This known position has a known value of motor counts. The motor counts are reset to this known value. Alternatively, the expected value is compared with the actual value. If there is a discrepancy, the motor counts are reset. In one embodiment, if the discrepancy is large, an error can be noted in the electronic control unit indicating a possible issue with the motor. Control passes to block 148 in which the mirror is calibrated in the outward position. In some embodiments, only one of 146 or 148 is used to calibrate the mirror. In other embodiments, calibration is performed at both positions to detect a problem with the mirror. That is, after performing the calibration in one of the positions, if a reset of the value of counts is indicated at the other position, then a problem may be identified.

In some embodiments, a position sensor 22 is provided on the side mirror. Sensor 22 may be calibrated periodically. A calibration may be performed similar to that discussed above in the system without a sensor. That is, the mirror is moved to one of the stops and the sensor signal at the position is compared to the expected signal. If there is an error greater than a threshold, the calibration coefficients can be adjusted.

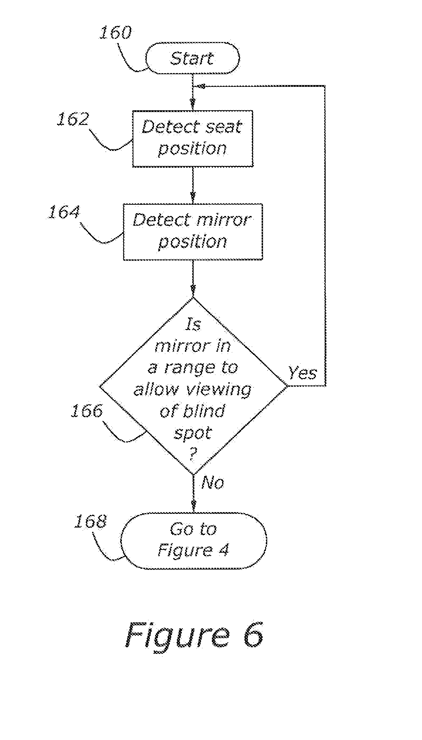

Although most drivers adjust the side mirror in such a manner that they can see a portion of the vehicle in such mirror, not all drivers do. Some drivers prefer to adjust their mirrors in such a manner to avoid the blind spot issue. For such drivers, it is desirable to avoid rotating the mirror when a vehicle is detected in the blind spot. An example of such an algorithm is shown in a flowchart in Figure 6 starting at 160. Control passes to block 162, in which the linear displacement of the driver's seat is detected. In block 164, the mirror position is detected. Control passes to block 166 to estimate whether the mirror is in a range to allow viewing of the blind spot, with such determination based on seat position. Seat position, here, is used as a surrogate for the position of the driver's eyes. Such estimation of whether the operator-adjusted position of the mirror permits viewing of the blind spot is more accurate when the sensor is a linear position sensor. If the blind spot is in the viewing range of the mirror, control passes back to 162. That is, the mirror is not adjusted, per the algorithm described above when an alien vehicle is detected. If the mirror does not allow viewing of the blind spot, control passes from 166 to 168, in which control passes to Figure 4. That is, the mirror is adjusted per the flowchart in Figure 4 or per other embodiments described. For example, Figure 4 is directed to a two-position seat sensor. If the sensor is instead a linear position sensor, the mirror is moved angularly an amount based on the seat position.

While the best mode has been described in detail with respect to particular embodiments, those familiar with the art will recognize various alternative designs and embodiments within the scope of the following claims. While various embodiments may have been described as providing advantages or being preferred over other embodiments with respect to one or more desired characteristics, as one skilled in the art is aware, one or more characteristics may be compromised to achieve desired system attributes, which depend on the specific application and implementation. These attributes include, but are not limited to: cost, strength, durability, life cycle cost, marketability, appearance, packaging, size, serviceability, weight, manufacturability, ease of assembly, etc. The embodiments described herein that are characterized as less desirable than other embodiments or background art implementations with respect to one or more characteristics are not outside the scope of the disclosure and may be desirable for particular applications.

## Claims

1. A method to adjust a side mirror, comprising:
detecting an alien vehicle in a blind spot of a host vehicle;
detecting a driver's seat position in the host vehicle; and
in response to detecting an alien vehicle:
rotating the side mirror in a first direction through a particular angle, the particular angle based on the driver's seat position.

2. The method of claim 1, further comprising:
rotating the side mirror in a second opposite direction through the particular angle when the alien vehicle is no longer detected.

3. The method of claim 1 or 2, further comprising:
rotating the side mirror in a second opposite direction through the particular angle after a predetermined period of time at the outward position.

4. The method of any preceding claim, wherein a sensor capable of sensing at least two positions is operatively coupled to the driver's seat, a signal from the sensor indicates fore or aft position of the seat, the particular angle is a first predetermined angle when the driver's seat is determined to be in the fore position, and the particular angle is a second predetermined angle when the driver's seat is determined to be in the aft position.

5. The method of any preceding claim, wherein a motor is coupled to the mirror, the motor is coupled to an electronic control unit, the electronic control unit stores a value of motor counts, and the value of motor counts provides a measure of mirror position, the method further comprising:
increasing the value of motor counts when the mirror is commanded to move in a first direction; and
decreasing the value of motor counts when the mirror is commanded to moved in a direction opposite the first direction.

6. The method of claim 5, further comprising:
calibrating the value of motor counts, the calibrating comprising:
commanding the mirror to a known position; and
resetting the value of motor counts based on the known position wherein the known position is one of an inward stop and an outward stop.

7. The method of any preceding claim wherein a linear position sensor is provided on the vehicle to measure seat position, the method further comprising:
determining whether a driver adjusted position of the mirror provides a view of the blind spot, wherein the determination is based on a signal from the linear position sensor, the particular angle is zero when the operator-adjusted position does provide a view of the blind spot and the particular angle is a function of the signal from the linear position sensor when the operator-adjusted position fails to provide a view of the blind spot.

8. An apparatus for positioning a side mirror on a host vehicle, comprising:
a blind spot detector for detecting an alien vehicle in the host vehicle's blind spot;
a sensor coupled to an adjustable driver's seat of the host vehicle;
a motor coupled to the side mirror; and
an electronic control unit (ECU) electronically coupled to the blind spot detector, the sensor, and the motor, wherein:
the ECU is adapted to command the motor to rotate the side mirror a particular angle in response to the blind spot detector detecting an alien vehicle in the host vehicle's blind spot the particular angle based on the driver's seat position.

9. The apparatus of claim 8, wherein the sensor is a fore/aft sensor and wherein the ECU commands the motor to rotate a first predetermined angle in response to the driver's seat being at a first position and to rotate a second predetermined angle in response to the driver's seat being at a second position.

10. The apparatus of claim 9 wherein the fore/aft sensor is a Hall effect sensor, the apparatus further comprising:
a base coupled to the seat that causes a voltage to be developed in the sensor when proximate the sensor.

11. The apparatus of any of claims 8 to 10, further comprising:
a sensor coupled to the side mirror to determine an angle of rotation of the side mirror.

12. The apparatus of claim 11 wherein:
the ECU stores a value of the motor counts as the motor is commanded to move with the value increasing when the motor is commanded to move in one direction and the value decreasing when the motor is commanded to moved in the opposite direction;
the value indicating mirror position: and
the ECU periodically calibrating the mirror by commanding the mirror to attain a known position and resetting the value based on the mirror being in the known position.

13. The apparatus of claim 12 wherein the known position is one of a most inward position and a most outward position.

14. The apparatus of any of claims 8 to 13 wherein the blind spot detection system is based on at least one of: visible light, radar, infrared light, ultrasound, and lidar.
